# EUROPEAN PATENT APPLICATION

(11) **EP 0 881 802 A1**
(43) Date of publication of application: **02.12.1998**
(21) Application number: 98109761.1
(22) Date of filing: 28.05.1998
(51) Int. Cl.: H04L 12/58, H04M 3/50, G06F 17/60

(54) **Method and device for specifying a transmission of, and a reply to, an electronic message**

(30) Priority: 29.05.1997 JP 140150/97
(71) Applicant: Casio Computer Co., Ltd., Shibuya-ku, Tokyo 151-8543 (JP)
(72) Inventor: Endo, Norio, Casio Computer Co., Ltd., Hamura-shi, Tokyo 205-8555 (JP); Kaneko, Katsuyoshi, Casio Computer Co., Ltd., Hamura-shi, Tokyo 205-8555 (JP)
(74) Representative: Grünecker, Kinkeldey, Stockmair & Schwanhäusser Anwaltssozietät

(57) **Abstract**

A method of specifying a transmission of an electronic message. A sending terminal inserts information for specifying a desired one of a plurality of replying means into a header of an electronic message to be sent (FIG. 4). The message in which the information for specifying the desired replying means is inserted is then sent from the sending terminal to a receiving terminal. The receiving terminal selects a specified replying means from among a plurality of replying means, in response to the message being received, on the basis of information on a replying means inserted into a header of the received message (steps S21 and S22 of FIG. 6). The receiving terminal replies to the message in a replying means conforming to the information on the selected specified replying means (steps S23, S25, S26, S27 of FIG. 6).

## Description

The present invention relates to a method and device for specifying a transmission of, and a reply to, an electronic message.

Conventionally, messages are exchanged by electronic mails via an Internet. Recently, communication using an electronic mail is applied in communication terminals such as PHSs which use a communication service.

When a user replies to an electronic mail received from the user's party in such electronic mail system, data on a sending source mail address or a reply destination mail address in a header of the electronic mail from the user's party is automatically inserted into a destination mail address of a reply mail and a replying process is then performed. Thus, the user is able to send out the reply mail in a simple manner.

When an electronic mail is desired as a replying method in the electronic mail system, the user is able to perform a replying process in a simple operation. When another replying method, for example, using a telephone, is desired, however, the user cannot specify a telephone number as the reply destination mail address. Thus, the user cannot perform a replying process, using a telephone, in a simple operation.

It is therefore an object of the present invention to provide a method and device for specifying a transmission of, and a reply to, an electronic message such as an electronic mail in which the replying process is performed in a simple operation in accordance with a replying process which the sending source desires.

In order to achieve the above object, according to the present invention, there is provided a system of specifying a transmission of an electronic message, comprising:
a sender terminal for sending an electronic message including information which specifies a desired one of a plurality of replying means; and
a receiver terminal for receiving the electronic message from the sender terminal, and replying by one of a plurality of means specified by the information.

In order to achieve the above object, according to the present invention, there is also provided an apparatus for sending an electronic message, comprising:
means for inserting information for specifying a desired one of a plurality of replying means into an electronic message; and
means for sending the message in which the information for specifying the desired replying means is inserted by said inserting means.

In order to achieve the above object, according to the present invention, there is also provided an apparatus for replying to a received electronic message, comprising:
means for detecting a replying means from among a plurality of replying means, in response to an electronic message being received, on the basis of information on a replying means inserted into the received message; and
means for replying by the replying means detected by said detecting means.

In order to achieve the above object, according to the present invention, there is also provided a computer readable storage medium having a program enable by a computer, wherein said program for making an electronic message comprised of a header and a body comprises:
function for inputting a destination into a header of an electronic message;
function for inputting a desired one of a plurality of replying means into the header; and
function for inputting a body of the electronic message.

In order to achieve the above object, according to the present invention, there is also provided a computer readable storage medium having a program enable by a computer, wherein said program for making a replying electronic message corresponding to a received electronic message comprises:
function for detecting a replying means into a received electronic message, wherein said replying means is a desired one of a plurality of a replying means;
function for replying by the replying means selected by said selecting means.

FIG. 1 is a schematic of a portable communication terminal used in a PHS to which the method of specifying a reply of an electronic mail according to the present invention is applied;
FIG. 2 shows various programs stored in a program storage device of FIG. 1;
FIG. 3 shows a basic format of an electronic mail sent/received to/from a user's party;
FIG. 4 is a flow chart of the details of a send mail creating process in which a replying process employed in the present embodiment is specifiable;
FIG. 5 is a flow chart of the details of a process for waiting for an input which specifies the replying process of the FIG. 4 flow chart;
FIG. 6 is a flow chart of the details of a replying process performed after an electronic mail is received;
FIG. 7A is a displayed symbol; and
FIG. 7B is a structure of an address book.

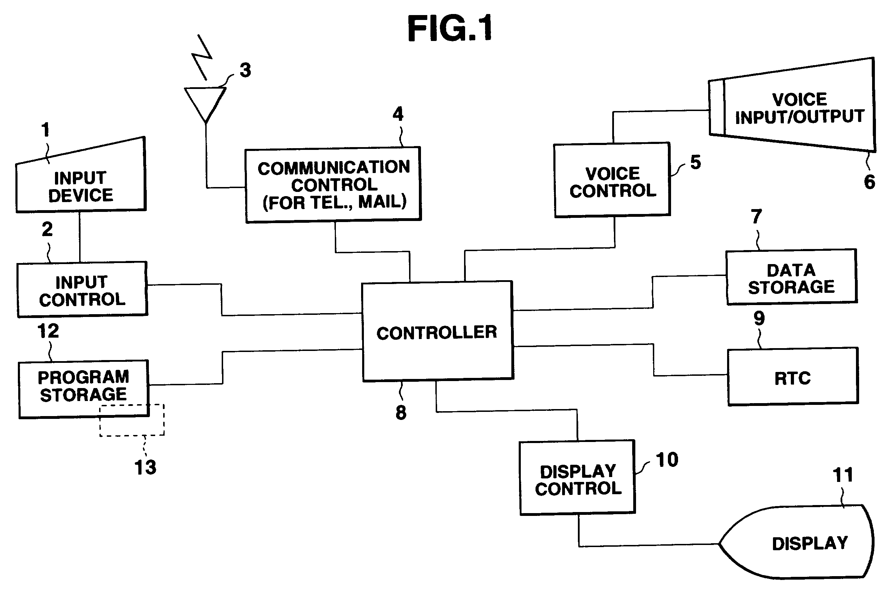

One embodiment of the present invention will be described in detail with reference to the accompanying drawings. FIG. 1 is a schematic of a portable communication terminal such as, for example, a portable telephone or a PHS, to which the method of specifying a reply to an electronic message such as an electronic mail (the term "electronic mail" is used hereinafter instead of the term "electronic message" for easy understanding) according to the present invention is applied. The communication terminal is provided with an input device 1 (e.g. key board, tablet, etc) which enters data, etc., to be sent by an electronic mail or a command to execute a predetermined function; an input control unit 2 which controls the entering operation of the input device 1; a communication control unit 4 which controls communication of an electronic mail or telephone with the user's party via an antenna 3; a voice input/output device 6 (A/D converter, amplifier, microphone, etc) which inputs/outputs voice; a voice control unit 5 which controls the inputting/outputting operation (e.g. CODEC) of voice in the voice input/output device 6; a program storage device 12 which stores programs executing by a controller 8 and data; a data storage device 7 which stores data entered via the input device 1 and data received from the user's party; a real time clock (RTC) 9 which manages dates and times; a display device 11 which displays a send/reply mail, an entered data from input device 1, etc; a display control unit 10 (display driver) which controls the displaying operation of the display unit 11; and a controller 8 (e.g., a computer) which controls the respective elements of the communication terminal. While the communication terminal is illustrated as having the antenna for sending/receiving an electronic mail by radio, the present invention is not limited to this particular case. For example, the sending/receiving of an electronic mail may be performed by cable.

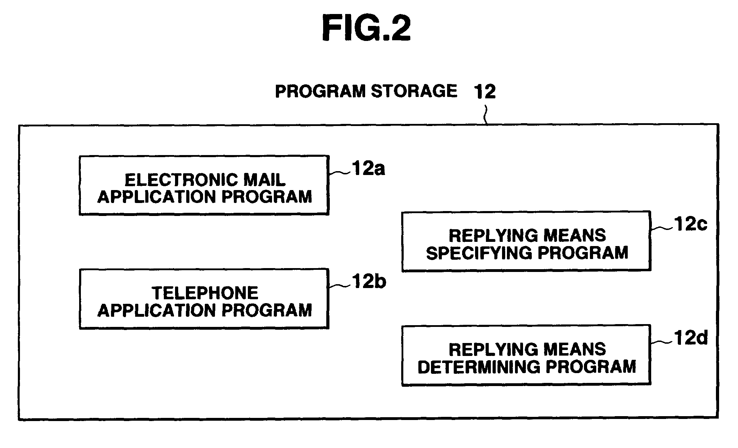

As shown in FIG. 2, the program storage device 12 is composed of a magnetic or optical recording medium or a semiconductor memory 13 (e.g. EEPROM) provided fixedly or removably therein. The storage medium 13 stores data and contains a mail application program 12a for realizing an electronic mail function; a telephone application program 12b for realizing a telephone function; a replying means specifying program 12c for selecting one of a telephone and a mail as a reply means; and a replying means determining program 12d for determining whether or not the reply destination is a mail address or a telephone number when the user intends to reply to the received mail. The data/programs stored/contained in the storage medium 13 of this terminal may be stored/contained in a storage medium provided in another remote device. In this case, the present portable terminal may fetch and read the data/programs stored/contained in that device via a public line connected between the terminal and that device.

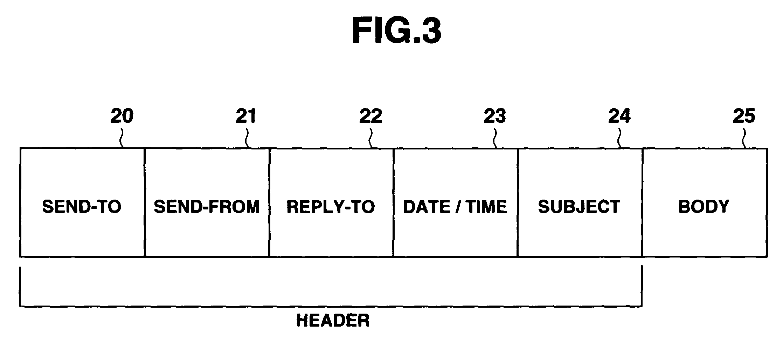

FIG. 3 shows a basic format of mails exchanged between the user and her or his party. A basic format is consisted of a header and a body such as MIME (Multipurpose Internet Mail Extensions). A header is composed of at least a send-to section 20 having a receiver mail address, a send-from section 21 having a sender mail address, a reply-to section 22 having a mail address or a telephone number for replying, a date/time section 23 when a mail is sent, and a subject section 24 having a mail title. A body is composed of a main part of a mail created by the user (e.g. text, image, audio, video, message, multipart, and application).

The user's mail address or telephone number is specifiable in the reply-to section 22 during creation of the electronic mail. When a reply by telephone is desired, the user's telephone number is inserted into the reply-to section 22 so that when the user's party replies, a telephone reply is automatically made to the user's telephone number. When a reply by electronic mail is desired, the user's mail address is inserted into the reply-to section 22 so that when the user's party makes a reply, the user's mail address is automatically inserted into the reply destination mail address section 22 in a reply mail creating mode. Information on a date/time obtained from RTC 9 is automatically inserted into the date/time section 23 when the electronic mail is sent. A preset user's mail address is automatically inserted into the send-from section 21.

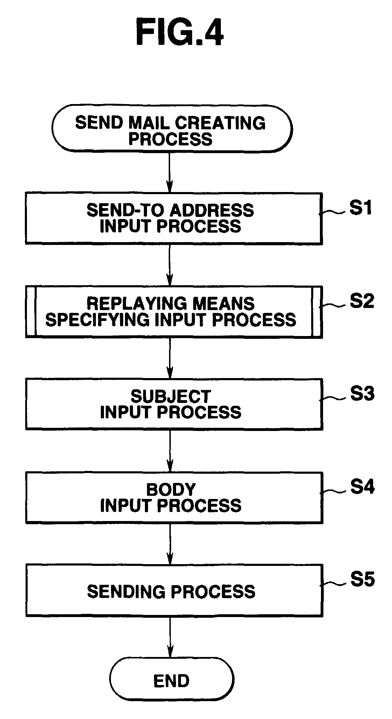

The details of a send mail creating process in which a replying method performed in the present embodiment is specified will be described with reference to the flow chart of FIG. 4.

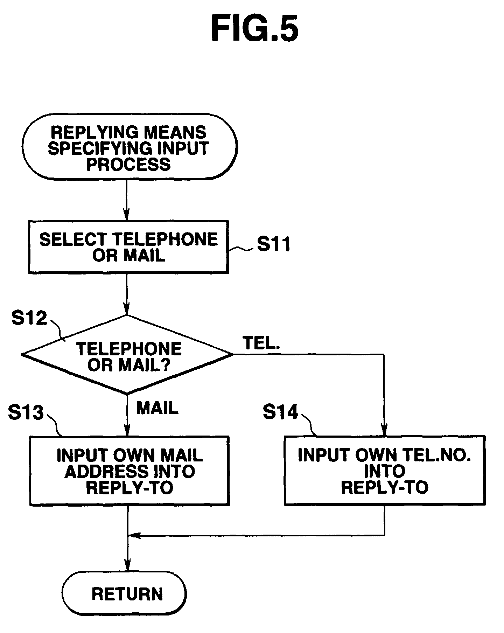

When a send mail creating process is instructed by user, the flow chart of FIG. 4 in the program storage 12 is executed by the controller 8. In a send-to address input process at step S1, the controller 8 is in a waiting state until a mail address of a receiver is entered from the input device 1 by the user. When the controller 8 detects the entry of the mail address, it inserts the mail address into the send-to section 20 of the mail format of FIG. 3. Usually, a input of a mail address is realized by picking up a mail address from a address book. At step S2, the controller 8 performs a replying means specifying input process, which will be described next with reference to FIG. 5.

In FIG. 5, the user selects one of a telephone and an electronic mail as a replying means (step S11). In response to this operation, the controller 8 determines the means selected by the user (step S12). When the user selects, for example, a telephone, the controller 8 automatically enters the own telephone number of the user's terminal into the reply-to section 22 of the FIG. 3 mail format (step S14). When the controller 8 specifies an electronic mail, it automatically enters the own mail address into the reply-to section 22 (step S13). And then the controller 8 terminates this process and returns to a send mail creating process in FIG. 4.

In the subject input process at step S3 of FIG. 4, the controller 8 is in a waiting state until a title of the mail is entered from the input device 1 by the user. When the controller 8 detects the entry of the title of the mail, it inserts the title of the mail into the subject section 24 of the FIG. 3 mail format. In a body input process at step S4, the controller 8 is in a waiting state until entering a mail body (e.g. text, image, audio, video, message, multipart, and application ) via the input device 1 by the user. When the controller 8 detects the entry of the body of the mail, the controller 8 inserts the body into the body section 25 of the FIG. 3 mail format.

when a sending a mail is instructed by user, a sending process is performed (step S5) in which the sending side mail address is inserted into the send-from section 21 and the date/time information is automatically inserted into the date/time section 23.

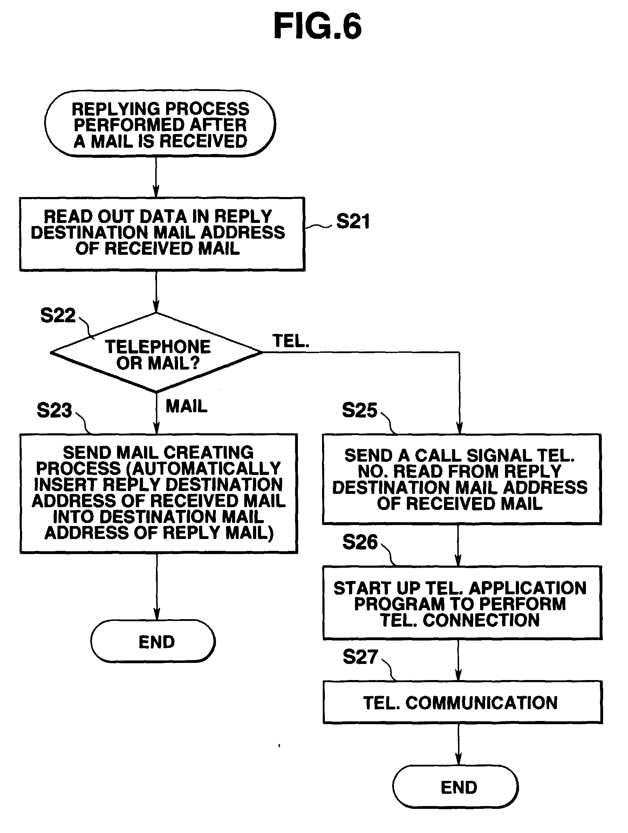

FIG. 6 shows the details of a flow chart in which an electronic mail created in the FIG. 4 process and sent by the user's party is received and a replying process is performed by the user on the mail.

When the user specifies a reply to the received electronic mail, the controller 8 reads out the data in the reply-to section 22 of the specified mail (step S21). The controller 8 then determines whether the reply should be made by telephone or electronic mail on the basis of the read data (step S22). If the reply should be made by telephone, the controller 8 prepares for sending a call signal by telephone, and then automatically inputs thereto the telephone number read from the reply-to section 22 of the specified mail (step S25). The controller 8 then starts up the telephone application program 12b to performs telephonic connection with the user's party (step S26), makes telephonic communication with the user's party (step S27), and then terminates the communication (step S28).

When the controller 8 determines at step S22 that the reply should be made by electronic mail, it starts up the electronic mail application program 12a to create a reply mail (step S23). At this time, the mail address read from the reply-to section 22 of the specified mail is automatically inserted into the send-to section 20 of the reply mail, sends the mail to the destination communicator as the user's party, and then terminates the communication (see Fig 4).

While in the embodiment it is illustrated that the telephone number or mail address is inserted into the reply-to section 22 of the sent mail as the reply means, the user's telephone number or mail address may be inserted into the sending-from section 21 so that the receiver terminal reads the data in the sending-from section 21 and recognizes the data as the telephone number or mail address.

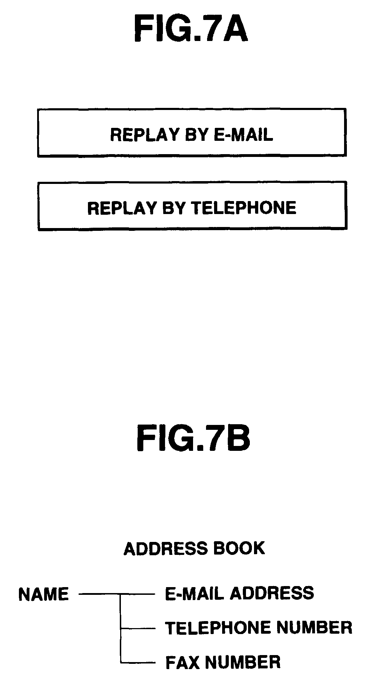

Further, a reply means identifier (e.g. telephone or electric mail) may be inserted into the reply-to section 22, so that the receiver terminal reads and displays the reply means identifier (see fig. 7 B). Then the receiver terminal may have an address book (see fig. 7 A) in which a telephone number and mail address for each person are stored, so that the receiver terminal picks up the telephone number or mail address from the address book based on the reply means identifier.

Further, the reply means may be inserted into the body 25 of the sending mail.

According to the present embodiment, when a reply by telephone is desired in the send mail creation, the telephone number is inserted into the reply-to section 22 or the send-from section 21. Thus, the user's party who has received the electronic mail is able to perform an operation similar to a reply by electronic mail to reply to the received mail by telephone, so that the reply by telephone is easily performed. In addition to the reply by telephone, a reply, for example, by facsimile communication, may be performed.

According to the present invention, when the user replies to a received electronic mail, the user is able to perform by a simple operation a replying method which the sending source desires.

## Claims

1. A system of specifying a transmission of an electronic message, comprising:
a sender terminal (FIG. 4) for sending an electronic message including information which specifies a desired one of a plurality of replying means; and
a receiver terminal (FIG. 6) for receiving the electronic message from the sender terminal, and replying by one of a plurality of means specified by the information.

2. The system according to claim 1, wherein the plurality of replying means (step S12) comprises at least an electronic mail and a telephone.

3. The system according to claim 1, wherein the information (FIG. 3) for specifying the replying means is inserted in a header or a body of the electronic message.

4. An apparatus for sending an electronic message, comprising:
means (FIG. 5) for inserting information for specifying a desired one of a plurality of replying means into an electronic message; and
means (step S5) for sending the message in which the information for specifying the desired replying means is inserted by said inserting means.

5. The apparatus according to claim 4, wherein the plurality of replying means (step S12) comprises the use of at least an electronic mail and a telephone.

6. The apparatus according to claim 4, wherein the information (FIG. 3) for specifying the replying method is inserted in a header or a body of the message.

7. An apparatus for replying to a received electronic message, comprising:
means (step S22) for selecting a replying means from among a plurality of replying means on the basis of information on a replying means inserted into the received message; and
means (steps S23, S25, S26, S27) for replying by the replying means selected by said selecting means.

8. The apparatus according to claim 7, wherein the plurality of replying means (step S22) comprises at least an electronic mail and a telephone.

9. The apparatus according to claim 8, wherein the information (step S22) comprises at least an electronic mail address and a telephone number.

10. The apparatus according to claim 7, wherein the information (FIG. 3) for specifying the replying means is inserted in a header or a body of the message.

11. The apparatus according to claim 7, wherein;
means (FIG. 7A) for displaying a symbol corresponding to the information of the message when the replying is instructed.

12. The apparatus according to claim 7, wherein;
means (FIG. 7B) for storing a destination corresponding to the information; and
said replying means replies by the selected replying means using the destination corresponding to the information which stored in the storing means.

13. A computer readable storage medium having a program enable by a computer, therein said program for making an electronic message comprised of a header and a body comprises:
function (step S1) for inputting a destination into a header of an electronic message;
function (step S2) for inputting a desired one of a plurality of replying means into the header; and
function (step S4) for inputting a body of the electronic message.

14. The computer readable storage medium according to claim 13, wherein;
said desired replying means (steps S13, S14) is a call identification of each replying means.

15. The computer readable storage medium according to claim 14, wherein;
said call identification (steps S13, S14) of each replying means are at least an electronic message address and a telephone number.

16. A computer readable storage medium having a program enable by a computer, wherein said program for making a replying electronic message corresponding to a received electronic message comprises:
function (steps S21, S22) for selecting a replying means into a received electronic message, wherein said replying means is a desired one of a plurality of a replying means;
function (steps S23 , S25, S26, S27) for replying by the replying means selected by said selecting means.

17. The computer readable storage medium according to claim 16, wherein;
said replying means (steps S 23, S25) are at least a electronic message and a telephone.
